# EUROPÄISCHE PATENTSCHRIFT

(11) **EP 2 058 913 B1**
(45) Veröffentlichungstag und Bekanntmachung des Hinweises auf die Patenterteilung: **22.07.2020**
(21) Anmeldenummer: 08018282.7
(22) Anmeldetag: 18.10.2008
(51) Int. Cl.: H02G 3/32

(54) **Verstellbare Montagekonsole zur Befestigung von Leitungsführungskanälen**
Adjustable installation console for fitting cable lead channels
Console de montage réglable destinée à la fixation de canaux de guidage de conduite

(30) Priorität: 09.11.2007 DE 202007015607 U
(43) Veröffentlichungstag der Anmeldung: 13.05.2009
(73) Patentinhaber: Tehalit GmbH, 67716 Heltersberg (DE)
(72) Erfinder: Arnold, Hans-Joachim, 66851 Linden (DE); Pfeifer, Christoph, 67707 Schopp (DE)
(74) Vertreter: Nuss, Laurent

(56) Entgegenhaltungen:
- EP-A1- 0 593 858
- EP-A1- 1 465 311
- WO-A2-2006/123062
- DE-A1- 4 303 612
- DE-U- 7 306 928
- DE-U1- 20 110 986

## Beschreibung

Die vorliegende Erfindung betrifft eine verstellbare Montagekonsole zur Befestigung von Leitungsführungskanälen an einer Gebäudefläche.

Leitungsführungskanäle dienen der Verlegung und Aufnahme von Kabel und Leitungen in Gebäuden. Solche Kanalinstallationen werden häufig als Wandkanäle installiert. Bei der Installation müssen in bestimmten Montagesituationen ausreichende Abstände eingehalten werden, wie z. B. bei Heizkörpern oder Fensterbänken. Hierfür werden Montagekonsolen eingesetzt, mit denen der Wandkanal mit dem gewünschten Abstand zur Wand montiert werden kann. Eine solche Montagekonsole besteht üblicherweise aus einem Montageprofil, das an die Wand geschraubt werden kann, und einem Ausleger oder Abstandshalter.

Eine solche Konsole ist in der EP 1 052 756 beschrieben. Das Montageprofil wird hierbei über Befestigungsbohrungen mit der Gebäudefläche (z. B. Wand) befestigt. Der Ausleger ist teleskopierbar und mit Hilfe einer Schraube fixierbar. Der Wandkanal wird über Bodenlochungen über eine mit Langlöchern versehene Leiste mit Halteteilen verhakt und schließlich verschraubt. Die Halteteile sind hierbei in den Langlöchern seitlich verstellbar. Dadurch ist es möglich, die am Kanalunterteil angebrachten Bodenlochungen mit den entsprechenden Bodenlochungen der Leiste zu fluchten.

Obgleich dieses System ein hohes Maß an Flexibilität für die Kanalmontage bietet, ist für jede Kanalgröße eine eigene Leiste erforderlich. Ferner bietet diese Konsole keine Möglichkeit, Wandunebenheiten auszugleichen, d. h. sie bietet keine Verstellmöglichkeit des Auslegers nach oben oder nach unten.

In der EP 0 593 858 wird eine mehrteilige Konsole zur Festlegung von Installationskanälen auf Unterlagen wie Gebäudewänden und dergleichen beschrieben. Bei dieser Konsole ist vorgesehen, dass neben dem vorderen und dem hinteren Teilbereich ein gestrecktes Mittelteil mit einer Langlochführung für den vorderen Teilbereich vorgesehen ist. An diesem gestreckten Mittelteil ist außerhalb der Langlochführung der hintere Teilbereich mit seiner winkelförmigen Abkröpfung über ein Verbindungselement drehbeweglich gehaltert. In den gegenüber der Drehachse gelegenen Randbereich des Mittelteils ist eine gebogene, durchgehende Schlitzöffnung eingebracht. Durch diese Schlitzöffnung ist ein Feststellelement mit dem gestreckten Mittelteil verbindbar.

Um bei der Montage auf verschiedene Kanalgrößen reagieren zu können, wird in der EP 1 804 354 ein Baukastensystem vorgeschlagen, bei dem der Ausleger Stirnplatten mit unterschiedlicher Materialstärke und Längen umfasst. Zur Verbindung des Auslegers an ein Trageprofil ist ein Adapter vorgesehen. Das Trageprofil weist in regelmäßigen Abständen Langlöcher und der Ausleger stirnseitig an seiner zu dem Trageprofil weisenden Seite eine Stirnplatte mit einer Durchbrechung auf. Der Adapter verfügt über eine an dem Trageprofil mittels zumindest eines Hakenelements einhakbare Platte. Der Platte des Adapters ist ein von seiner zum Trageprofil wegweisenden Seite ausgestelltes Hakenelement zugeordnet, das zum Anschließen des Auslegers an den Adapter in die Durchbrechung der Stirnplatte des Auslegers eingreift. Bei diesem System wird versucht, mittels einer Teilezusammenstellung auf verschiedene Installationsanforderungen wie Kanalstärken oder Kanalbreiten zu reagieren. Dennoch müssen zur Kanalmontage je nach Kanaltyp und Kanalgröße eine Reihe unterschiedlicher Teile und Werkzeuge mitgenommen werden. Dadurch ist ein großer Teileaufwand erforderlich. Das ist unbefriedigend.

Die Dokumente EP 0 593 858 A1, DE 43 03 612 A1 und DE 201 10 986 U1 offenbaren verstellbare Montagekonsolen, in denen aufwendige Arbeitsschritte erforderlich sind, die den Einsatz von Werkzeugen und Schrauben benötigen. Dies ist für den Monteur ebenfalls ungünstig.

Es ist daher Aufgabe der vorliegenden Erfindung, eine universell einsetzbare, verstellbare Montagekonsole bereitzustellen, die ohne aufwändige Teilezusammenstellung für verschiedene Kanaltypen und Kanalgrößen verwendbar und an verschiedene Montagesituationen anpassbar ist.

Diese Aufgabe wird gelöst durch eine Montagekonsole gemäß Anspruch 1.

Die erfindungsgemäße Montagekonsole bietet in mehrerlei Hinsicht Flexibilität bei der Kanalmontage. Im Gegensatz zu den bekannten Montagekonsolen ist es möglich, den Winkel zwischen Ausleger und Montageprofil entsprechend den Montageanforderungen zu verändern. Dadurch ist eine Höhenverstellung des Auslegers möglich, um beispielsweise Wandunebenheiten oder schiefe Wandabschnitte auszugleichen. Ausleger und/oder Montageprofil sind hierzu mit einem Längsloch versehen, in dem eine Stellschraube geführt wird. Ist der korrekte Winkel eingestellt, kann der Ausleger mit der Stellschraube fixiert werden. Vorzugsweise ist eine Winkelanpassung von mehr als 0° gegenüber dem herkömmlichen 90°-Winkel möglich, was von der Größe des Langloches abhängt. In praktischen Anwendungen sind Winkel in einem Bereich von ± 1° bis ± 10°, bevorzugter in einem Bereich von ± 1° bis ± 5°, sinnvoll.

Der Ausleger besitzt wenigstens eines, vorzugsweise mehrere ausziehbare Teleskopelemente. Um die Montage möglichst einfach zu gestalten, sind handbetätigbare Verschlusselemente vorgesehen, mit denen die Teleskopelemente entrastet werden können. Ein solches Verschlusselement besteht beispielsweise aus einer zentralen Rastnase und zwei seitlichen Verrastungsschenkeln sowie zwei durch eine Aussparung des Teleskoparms greifende Nocken. Durch Herunterdrücken des Verschlusselementes wird das Teleskopelement entrastet und kann in die gewünschte Position herausgezogen werden. Weitere Teleskopelemente können über ein Längsloch mit bekannten Arretiermitteln (z. B. Schrauben oder Muttern) herausgezogen und fixiert werden. Dadurch können verschiedene Wandabstände eingestellt werden.

Der Kanal selbst wird an einer verstellbaren Adapterplatte befestigt. Die Adapterplatte ist mit dem äußersten Teleskopelement über Rasthaken mit einer Tragplatte verbunden. Die Adapterplatte besitzt Halteclips, um das Kanalunterteil mit dem Ausleger der Montagekonsole zu fixieren. Vorzugsweise handelt es sich hierbei um Halteclips, die in Lochungen des Kanalunterteils greifen und seitlich entlang einer Schiene verstellbar sind. Die Halteclips besitzen vorzugsweise zwei seitlich nach unten und im schrägen Winkel geneigte, sich gegenüberliegende Rastschenkel.

In einer weiteren Ausführungsform ist ein Teleskopelement über einen am Ausleger angebrachten Arretiermechanismus arretierbar. Der Arretiermechanismus verhindert das versehentliche Herausziehen oder Lösen des Teleskoparmes. Hierfür ist am Teleskoparm eine Aussparung vorgesehen, in die eine Rastnase des Arretiermechanismus greift. Geführt werden können die Teleskopelemente über Führungselemente, die am Ausleger und/oder den einzelnen Teleskopelementen angebracht sind.

Damit die Montagekonsole für Kabelkanäle mit unterschiedlichen Kanalbreiten eingesetzt werden kann, ist vor oder hinter der Adapterplatte eine Tragplatte angeordnet. Die Adapterplatte besitzt vorzugsweise Rasthaken, die in entsprechende Durchbrechungen der Tragplatte greifen (oder umgekehrt). Auf diese Weise kann die Adapterplatte je nach Rastzustand in unterschiedlicher Höhe mit der Tragplatte verrastet werden. Denkbar ist jedoch auch eine kontinuierlich ausziehbare Adapterplatte (z. B. verstellbar über eine Schiene). Durch die verrastbare, höhenverstellbare Adapterplatte können verschiedene Kanalbreiten an dieselbe Montagekonsole befestigt werden. Die Verwendung unterschiedlich großer Montagekonsolen oder Tragplatten bei der Kanalmontage entfällt. Dadurch ist es möglich, mit einer einzigen Montagekonsole verschiedene Kanaltypen, Kanalgrößen und Kanalbreiten zu montieren. Eine aufwändige Teilezusammensetzung bei der Kanalmontage entfällt.

Die universell einsetzbare Montagekonsole erlaubt es, auf verschiedene Montagebedingungen flexibel zu reagieren. Insbesondere erlaubt sie eine Höhenpositionierung des Kanals durch eine Winkelverstellung des Auslegers, eine Verstellung des Wandabstandes durch einen Teleskoparm, eine Arretierung der Teleskopelemente durch Verschlusselemente und einen Arretiermechanismus und den Ausgleich verschiedener Kanalbreiten durch eine gegenüber der Tragplatte verstellbare Adapterplatte.

Die Erfindung wird in den folgenden Zeichnungen näher erläutert. Es zeigen
- Fig. 1: eine isometrische Darstellung einer Ausführungsform der erfindungsgemäßen Montagekonsole mit Ausschnittsvergrößerung des Verschlusselementes,
- Fig. 2: die in Fig. 1 gezeigte Ausführungsform der erfindungsgemäßen Montagekonsole von der gegenüberliegenden Seite,
- Fig. 3: eine Ausführungsform des Arretiermechanismus des Teleskoparms der Montagekonsole und
- Fig. 4: eine Seitenansicht der Montagekonsole mit Tragplatte.

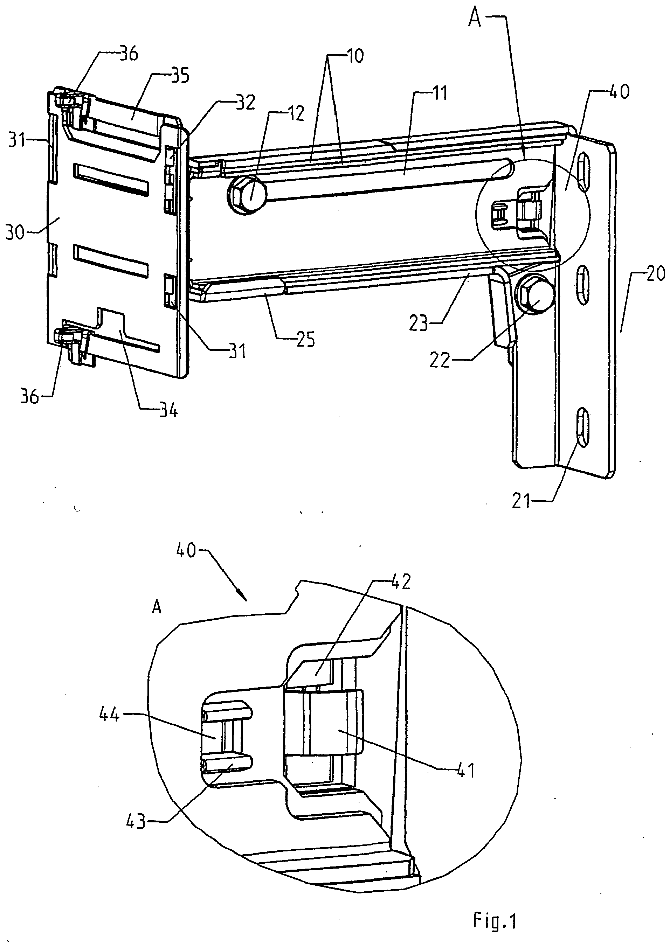

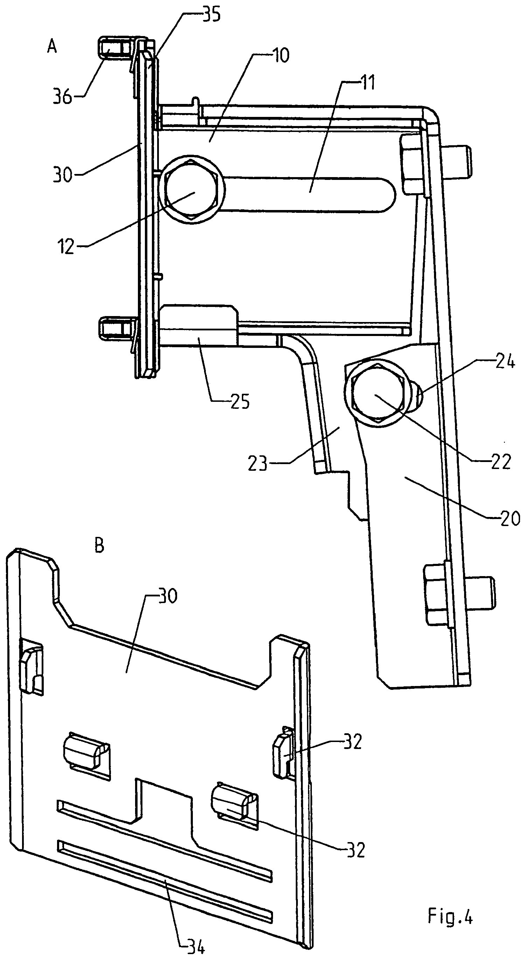

In Fig. 1 erkennt man den Aufbau und gleichzeitig die Grundfunktionen der erfindungsgemäßen Montagekonsole. Über ein Montageprofil 20 erfolgt die Befestigung der Montagekonsole an einer Gebäudefläche, z. B. Wand oder Decke. Das Montageprofil 20 besitzt hierzu Befestigungslochungen 21 zur Befestigung, z.B. mittels Schrauben. Ferner erkennt man den kanalseitigen Ausleger 23, der in Grundstellung rechtwinklig zum Montageprofil 20 angeordnet ist. Erfindungsgemäß ist eine Höhenpositionierung vorgesehen, indem der Ausleger 23 nach oben oder nach unten verstellt wird. Hierzu wird eine Stellschraube 22 geöffnet und der Ausleger 23 in einem Langloch 24 mit der Hand in die gewünschte Position gebracht (siehe Fig. 4). Auf diese Weise können Wandunebenheiten oder schiefe Gebäudeflächen ausgeglichen werden. Ist die gewünschte Position gefunden, wird die Stellschraube 22 zugedreht und der Ausleger 23 in dieser Position fixiert.

Ferner sind die ausziehbaren Teleskopelemente 10 zu erkennen. Vorgesehen ist je nach Wandabstand wenigstens ein, vorzugsweise mehrere Teleskopelemente 10. Das erste innere, montageprofilseitige Teleskopelement 10 wird über ein clipartiges Verschlusselement 40 verrastet und entrastet. Das Verschlusselement 40 ist in der Ausschnittsvergrößerung (A) näher gezeigt. Es besteht aus einer zentralen, laschenartig ausgebildeten Rastnase 41, zwei seitlichen Verrastungsschenkeln 42 und zwei in eine Aussparung 44 des Teleskopelementes 10 greifenden Nocken 43. Die Entrastung des Teleskopelements 10 erfolgt durch Eindrücken des Verschlusselementes 40, beispielsweise mit einem Werkzeug oder dem Finger. Dadurch wird das Teleskopelement 10 entrastet und kann in die gewünschte Position herausgezogen werden. Zum Ausgleich eines größeren Wandabstandes sind mehrere herausziehbare Teleskopelemente 10 vorgesehen. Das kanalseitige äußere Teleskopelement 10 wird in der gezeigten Ausführungsform über ein Langloch 11 mit einer Schraube 12 in der endgültigen Position fixiert. Die Führung der Teleskopelemente 10 erfolgt vorzugsweise über Führungselemente 25.

Das kanalseitige Teleskopelement 10 ist mit der Tragplatte 35 verbunden. Die Tragplatte 35 umfasst mehrere Langlöcher 34, die zur Aufnahme und Ausrichten von Befestigungsmitteln (Halteclips 36) für das Kanalunterteil dienen. Ein Halteclip 36 besteht vorzugsweise aus zwei seitlichen, senkrecht nach unten im spitzen Winkel geneigten und gegenüberliegenden Rastschenkeln und ist über einen durch das Langloch 34 gebildeten "Steg" verschiebbar. Entlang der Langlöcher 34 der Tragplatte 35 sind die Halteclips 36 seitlich verstellbar. Um verschiedene Kanalwandstärken auszugleichen, sind die Rastschenkel vorzugsweise unterschiedlich lang.

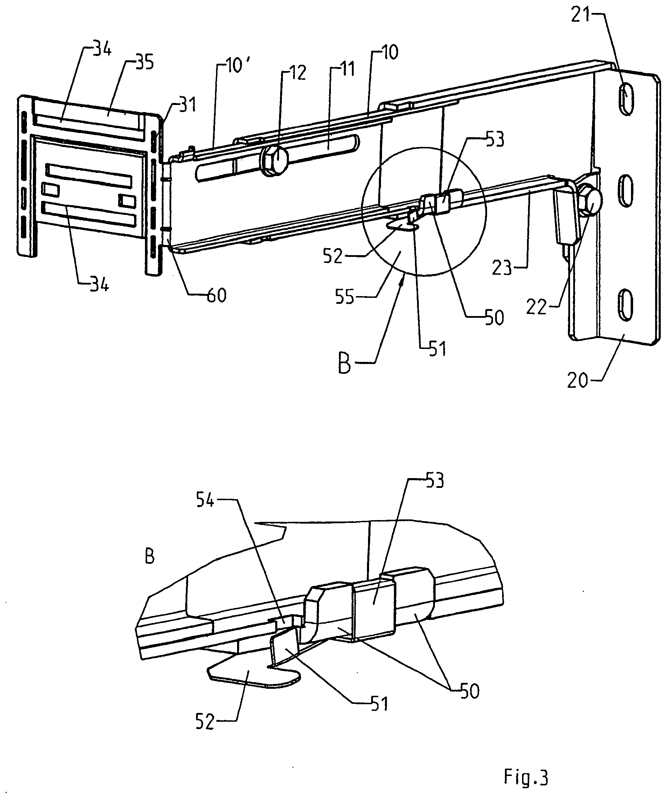

Ferner erkennt man die vor der Tragplatte 35 angeordnete Adapterplatte 30 mit daran ausgebildeten Hakenelementen 32 (siehe Fig. 4 B). Die Hakenelemente 32 greifen in Durchbrechungen 31 der rückseitig angeordneten Tragplatte 35 (siehe Fig. 3). Mit Hilfe der höhenverstellbaren Adapterplatte 30 kann relativ zur Tragplatte 35 eine Höhenverstellung vorgenommen werden und damit die Auflagefläche der Adapterplatte 30 für das Kanalunterteil vergrößert werden. Auf diese Weise können unterschiedliche Kanalbreiten an die Montagekonsole montiert werden. Die Adapterplatte 30 wird über Hakenelemente 32 in die dafür vorgesehenen Durchbrechungen 31 der Tragplatte 35 eingehängt. Die entlang des Langloches 34 verstellbaren Halteclips 36 greifen vorzugsweise durch eine Lochung im Kanalunterteil, um das Kanalunterteil an der Adapterplatte 30 bzw. der Tragplatte 35 zu halten.

Je nach Wahl der Durchbrechung 31 sind verschiedene Höhenpositionierungen der Adapterplatte 30 und damit des Auslegers 23 relativ zum Montageprofil 20 möglich. Ferner kann der Wandabstand über die Länge der Teleskopelemente 10 flexibel eingestellt werden. Schließlich ist eine Anpassung der Kanalbreite mittels der Adapterplatte 30 möglich. Dadurch wird bei der Kanalmontage größtmögliche Flexibilität gewährleistet und mit einer einzigen Montagekonsole können eine Reihe unterschiedlicher Kanaltypen, Kanalgrößen und Kanalbreiten montiert werden.

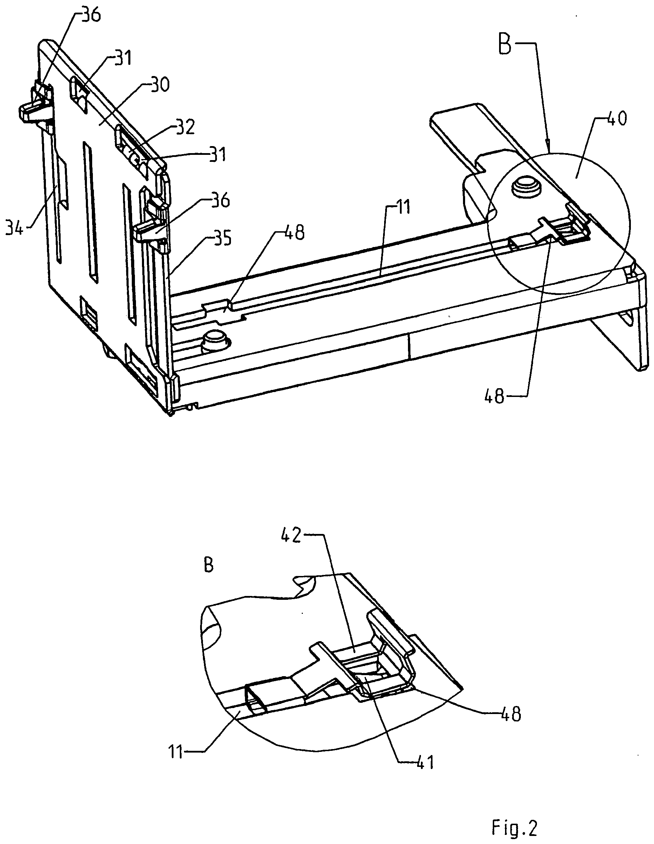

In Fig. 2 ist eine weitere Ansicht der in Fig. 1 gezeigten erfindungsgemäßen Montagekonsole gezeigt. Am Verschlusselement 40 erkennt man die nach unten geneigte laschenartige Rastnase 41 und die beiden sich seitlich am Ausleger abstützenden Verrastungsschenkel 42. Durch Herunterdrücken des Verschlusselementes 40 kann der Teleskoparm herausgezogen werden. Über ein Langloch 11 ist ein Verschieben des Teleskoparmes in verschiedene Rastpositionen 48 möglich. Durch die erfindungsgemäßen Verschlusselemente 40 und die einzelnen Rastpositionen 48 sind auf diese Weise verschiedene Montagezustände möglich. Die zur Befestigung des Kanalunterteils vorgesehenen Halteclips 36 sind sowohl an der Adapterplatte 30 als auch an der Tragplatte 35 zu erkennen.

Ferner erkennt man die Adapterplatte 30 mit der daran angeordneten Tragplatte 35. Die Halteclips 36 für das Kanalunterteil sind entlang dem Langloch 34 verschiebbar. Die Tragplatte 35 wird über Hakenelemente 32 und Durchbrechungen 31 mit der Adapterplatte 30 fixiert. Durch Herausziehen der Adapterplatte 30 und eine Verrastung in nächst höhere Durchbrechungen 31 kann der Kanalausgleich vorgenommen werden.

In Fig. 3 ist eine weitere Ausführungsform der erfindungsgemäßen Montagekonsole gezeigt. Am Ausleger 23 und/oder an einem Teleskopelement 10 befindet sich eine Kerbe 54, in die eine Nase 51 eines Arretiermechanismus 55 greift. Auf diese Weise können je nach Wandabstand verschiedene Montagepositionen eingestellt werden. Im eingefahrenen Zustand des Teleskopelementes 10 kooperiert die Nase 51 des Arretiermechanismus 55 mit der vorderen Kerbe 54 des Teleskoparms 10. Der vordere Teleskoparm 10' wird über das Langloch 11 in die gewünschte Position gebracht und mit einer Schraube 12 fixiert. Zur Arretierung des Teleskoparmes mit der Arretiervorrichtung 55 wird ein über ein Stützelement 53 gehaltener Hebel 52 nach oben gedrückt, so dass die Nase 51 in die Kerbe 54 greift. Zur Führung der Teleskopelemente 10 sind ferner Führungsschenkel 50 vorgesehen. Zum Lösen wird der Hebel 52 nach unten gedrückt. Das Teleskopelement 10 wird ausgefahren, bis die hintere Kerbe 54 in Höhe des Arretiermechanismus 55 liegt. Dann wird der Hebel 52 nach oben gedrückt, so dass die Nase 51 mit der hinteren Kerbe 54 kooperiert.

Als weitere Besonderheit ist in dieser Ausführungsform ein Scharnier 60 gezeigt, das die Adapterplatte 30 mit dem äußersten Teleskoparm 10' verbindet. Dadurch ist die Adapterplatte 30 auch seitlich verstellbar. Dies kann bei Montagesituationen nützlich sein, in denen Hindernisse oder Gebäudeflächenunebenheiten umgangen werden müssen. Auf diese Weise kann eine Umlenkung des Kanals bzw. des betreffenden Kanalabschnittes erfolgen.

In Fig. 4 ist die erfindungsgemäße Montagekonsole in Seitendarstellung gezeigt (A). Man erkennt das Montageprofil 20 und eine in einem Langloch 24 geführte Stellschraube 22. Im Normalzustand beträgt der Winkel zwischen Ausleger 23 und dem Montageprofil 20 etwa 90°. Durch Herunterdrücken oder Hochdrücken des Auslegers 23 kann eine Winkelverstellung von bis zu ± 5° erfolgen. Der so eingestellte Winkel kann mit der Stellschraube 22 fixiert werden. Auf diese Weise ist es möglich, Wandunebenheiten oder schiefe Gebäudeflächen auszugleichen.

Ferner erkennt man einen Teil des Teleskopelementes 10, der in einem Führungselement 25 geführt wird, sowie das zur Fixierung notwendige Langloch 11 und die Schraube 12. In der Sandwichanordnung der Adapterplatte 30 und der Tragplatte 35 erkennt man die Halteclips 36.

Der Aufbau einer erfindungsgemäßen Adapterplatte 30 ist in (B) gezeigt. Die Tragplatte besteht aus mehreren Langlöchern 34 und mehreren Hakenelementen 32. Vorzugsweise sind zwei zentrale und zwei randständige Hakenelemente 32 an einer Adapterplatte 30 ausgebildet. Diese greifen in die entsprechenden Durchbrechungen 31 der Tragplatte 35 (siehe Figur 3).

Durch die erfindungsgemäße Ausführungsform der Montagekonsole ist ein hohes Maß an Flexibilität bei der Kanalmontage gewährleistet. Der Monteur kann mit einer einzigen Montagekonsole verschiedene Kanaltypen montieren und den Kanal entsprechend den Gegebenheiten durch die verschiedenen Verstellmöglichkeiten angleichen.

## Patentansprüche

1. Verstellbare Montagekonsole zur Befestigung von Leitungsführungskanälen an einer Gebäudefläche, umfassend
- ein Montageprofil (20),
- einen Ausleger (23), mit einem oder mehreren herausziehbaren Teleskopelementen (10),
- eine Tragplatte (35) zum Halten eines Leitungsführungskanals, wobei der Winkel des Auslegers (23) zum Montageprofil (20) über eine in einem Langloch (24) geführte Stellschraube (22) verstellbar ist, **dadurch gekennzeichnet,**
- **dass** an der Tragplatte (35) Halteclips (36) ausgebildet sind, die entlang eines Langloches (34) verschiebbar sind,
- **dass** die Halteclips (36) wenigstens zwei seitlich nach unten, im spitzen Winkel geneigte und sich gegenüberliegende Rastschenkel besitzen und
- **dass** die wenigstens zwei Rastschenkel unterschiedlich lang sind.

2. Montagekonsole nach Anspruch 1, **dadurch gekennzeichnet, dass** an der Tragplatte (35) eine relativ zur Tragplatte (35) höhenpositionierbare Adapterplatte (30) angeordnet ist.

3. Montagekonsole nach Anspruch 1 oder 2, **dadurch gekennzeichnet, dass** wenigstens ein Teleskopelement (10) über ein Verschlusselement (40) mit dem Ausleger (23) verrastet wird.

4. Montagekonsole nach Anspruch 3, **dadurch gekennzeichnet, dass** das Verschlusselement (40) folgende Merkmale umfasst:
- eine zentrale Rastnase (41),
- zwei seitliche Verrastungsschenkel (42),
- zwei Rastnocken (43), die durch eine Aussparung (44) des Teleskopelementes (10) greifen.

5. Montagekonsole nach einem der vorhergehenden Ansprüche, **dadurch gekennzeichnet, dass** ein Teleskopelement (10) ein Langloch (11) aufweist, in dem zur Fixierung des Teleskopelementes (10) ein Arretiermittel (12), vorzugsweise eine Schraube, geführt wird.

6. Montagekonsole nach einem der Ansprüche 2-5, **dadurch gekennzeichnet, dass** die Adapterplatte (30) Rastelemente (32) aufweist, die mit Durchbrechungen (31) der Tragplatte (35) kooperieren.

7. Montagekonsole nach einem der Ansprüche 2-6 **dadurch gekennzeichnet, dass** an der Adapterplatte (30) Halteclips (36) ausgebildet sind, die entlang eines Langloches (34) verschiebbar sind.

8. Montagekonsole nach Anspruch 7, **dadurch gekennzeichnet, dass** die Halteclips (36) wenigstens zwei seitlich nach unten, im spitzen Winkel geneigte und sich gegenüberliegende Rastschenkel besitzen.

9. Montagekonsole nach Anspruch 8, **dadurch gekennzeichnet, dass** die wenigstens zwei Rastschenkel unterschiedlich lang sind.

10. Montagekonsole nach einem der vorhergehenden Ansprüche, **dadurch gekennzeichnet, dass** eine Arretierung der Teleskopelemente (10) über einen Arretierungsmechanismus (55) erfolgt, wobei der Arretierungsmechanismus (55) folgende Merkmale umfasst:
- wenigstens ein in etwa L-förmig ausgestalteter Führungsschenkel (50),
- ein Stützelement (53) mit einem daran ausgebildeten Hebel (52), wobei an dem Hebel (52) eine nach oben abgewinkelte Nase (51) ausgebildet ist, die in eine am Teleskopelement (10) ausgebildete Kerbe (54) greift.

11. Montagekonsole nach einem der vorhergehenden Ansprüche, **dadurch gekennzeichnet, dass** die Teleskopelemente (10) in einem am Teleskopelement (10) und/oder Ausleger (23) angeordneten Führungselement (25) geführt werden.

12. Montagekonsole nach einem der vorhergehenden Ansprüche, **dadurch gekennzeichnet, dass** die Tragplatte (35) über ein Scharnier (60) mit dem äußersten Teleskoparm (10) verbunden ist, so dass diese seitlich über das Scharnier (60) verstellbar ist.

## Claims

1. Adjustable installation console for securing cable lead channels onto a building space, comprising:
- a mounting section (20),
- an extension (23), with one or more extractable telescopic elements (10),
- a support plate (35) for holding a cable lead channel, wherein the angle of the extension (23) relative to the mounting section (20) can be adjusted by an adjusting screw (22) guided in an elongated hole (24),
**characterised in that**
- retaining clips (36) are formed on the support plate (35) which can be displaced along an elongated hole 934),
- the holding clips (36) have at least two catching legs which are inclined laterally downwards at an acute angle and are opposite one another and
- **in that** the at least two catching legs are of different lengths.

2. Installation console according to claim 1, **characterised in that** on the support plate (35) an adapter plate (30) is arranged which can be adjusted in height relative to the support plate (35).

3. Installation console according to claim 1 or 2, **characterised in that** at least one telescopic element (10) is locked by a closure element (40) to the extension (23).

4. Installation console according to claim 3, **characterised in that** the closure element (40) comprises the following features:
- a central locking nose (41),
- two lateral catching legs (42),
- two locking cams (43), which engage through a recess (44) of the telescopic element (10).

5. Installation console according to any of the preceding claims, **characterised in that** a telescopic element (10) has an elongated hole (11), in which a locking means (12), preferably a screw, is guided for fixing the telescopic element (10).

6. Installation console according to any of claims 2-5, **characterised in that** the adapter plate (30) has catching elements (32) which cooperate with perforations (31) of the support plate (35).

7. Installation console according to any of claims 2-6, **characterised in that** retaining clips (36) are formed on the adapter plate (30) which are displaceable along an elongated hole (34).

8. Installation console according to claim 7, **characterised in that** the retaining clips (36) have at least two catching legs which are inclined laterally downwards at an acute angle and are opposite one another.

9. Installation console according to claim 8, **characterised in that** the at least two catching legs are of different lengths.

10. Installation console according to any of the preceding claims, **characterised in that** the telescopic elements (10) are locked by means of a locking mechanism (55), wherein the locking mechanism (55) comprises the following features:
- at least one approximately L-shaped guiding leg (50),
- a support element (53) with a lever (52) formed thereon, wherein on the lever (52) a upwardly angled nose (51) is formed which engages in a notch (54) formed on the telescopic element (10).

11. Installation console according to any of the preceding claims, **characterised in that** the telescopic elements (10) are guided in a guiding element (25) arranged on the telescopic element (10) and/or extension (23).

12. Installation console according to any of the preceding claims, **characterised in that** the support plate (35) is connected via a hinge (60) to the outermost telescopic arm (10), so that the latter can be adjusted laterally by the hinge (60).

## Revendications

1. Console de montage réglable pour la fixation de conduits de câbles à une surface de bâtiment, comprenant
- un profilé de montage (20),
- un bras en porte-à-faux (23), avec un ou plusieurs éléments télescopiques extractibles (10),
- une plaque de support (35) pour maintenir un conduit de câbles, l'angle du bras en porte-à-faux (23) par rapport au profilé de montage (20) étant réglable au moyen d'une vis de réglage (22) guidée dans un trou oblong (24),
**caractérisée en ce**
- **que** des clips de retenue (36) sont formés sur la plaque de support (35), lesquels sont déplaçables le long d'un trou oblong (34),
- **que** les clips de retenue (36) présentent au moins deux branches d'encliquetage inclinées latéralement vers le bas selon un angle aigu et se faisant face, et
- **que** lesdites au moins deux branches d'encliquetage sont de longueurs différentes.

2. Console de montage selon la revendication 1, **caractérisée en ce qu'**une plaque d'adaptation (30) positionnable en hauteur par rapport à la plaque de support (35) est disposée sur la plaque de support (35).

3. Console de montage selon la revendication 1 ou 2, **caractérisée en ce qu'**au moins un élément télescopique (10) est encliqueté avec le bras en porte-à-faux (23) au moyen d'un élément de verrouillage (40).

4. Console de montage selon la revendication 3, **caractérisée en ce que** l'élément de verrouillage (40) comprend les caractéristiques suivantes :
- un ergot d'encliquetage central (41),
- deux branches d'encliquetage latérales (42),
- deux cames d'encliquetage (43) qui s'engagent à travers un évidement (44) de l'élément télescopique (10).

5. Console de montage selon l'une des revendications précédentes, **caractérisée en ce qu'**un élément télescopique (10) présente un trou oblong (11) dans lequel est guidé un moyen d'arrêt (12), de préférence une vis, pour la fixation de l'élément télescopique (10).

6. Console de montage selon l'une des revendications 2 à 5, **caractérisée en ce que** la plaque d'adaptation (30) présente des éléments d'encliquetage (32) qui coopèrent avec des ouvertures (31) dans la plaque de support (35).

7. Console de montage selon l'une des revendications 2 à 6, **caractérisée en ce que** des clips de retenue (36) sont formés sur la plaque d'adaptation (30), lesquels sont déplaçables le long d'un trou oblong (34).

8. Console de montage selon la revendication 7, **caractérisée en ce que** les clips de retenue (36) présentent au moins deux branches d'encliquetage inclinées latéralement vers le bas selon un angle aigu et se faisant face.

9. Console de montage selon la revendication 8, **caractérisée en ce que** lesdites au moins deux branches d'encliquetage sont de longueurs différentes.

10. Console de montage selon l'une des revendications précédentes, **caractérisée en ce que** les éléments télescopiques (10) sont arrêtés au moyen d'un mécanisme d'arrêt (55), le mécanisme d'arrêt (55) comprenant les caractéristiques suivantes :
- au moins une branche de guidage sensiblement en forme de L (50),
- un élément de support (53) sur lequel est formé un levier (52), un ergot (51) coudé vers le haut étant formé sur le levier (52) et s'engageant dans une encoche (54) formée sur l'élément télescopique (10).

11. Console de montage selon l'une des revendications précédentes, **caractérisée en ce que** les éléments télescopiques (10) sont guidés dans un élément de guidage (25) disposé sur l'élément télescopique (10) et/ou le bras en porte-à-faux (23).

12. Console de montage selon l'une des revendications précédentes, **caractérisée en ce que** la plaque de support (35) est reliée au bras télescopique le plus extérieur (10) par une charnière (60), de sorte qu'elle est réglable latéralement au moyen de la charnière (60).
